# EUROPÄISCHE PATENTSCHRIFT

(11) **EP 2 953 009 B1**
(45) Veröffentlichungstag und Bekanntmachung des Hinweises auf die Patenterteilung: **19.08.2020**
(21) Anmeldenummer: 15170260.2
(22) Anmeldetag: 02.06.2015
(51) Int. Cl.: G06F 3/03, G07B 15/06

(54) **HANDGERÄT UND VERFAHREN ZUR KONTROLLE EINES MAUTERFASSUNGSGERÄTS**
HAND-HELD DEVICE AND METHOD FOR CONTROLLING A TOLL REGISTRATION DEVICE
APPAREIL PORTATIF ET PROCEDE DE CONTROLE D'UN APPAREIL DE PEAGE ROUTIER

(30) Priorität: 03.06.2014 AT 503862014
(43) Veröffentlichungstag der Anmeldung: 09.12.2015
(73) Patentinhaber: Efkon GmbH, 8074 Raaba (AT)
(72) Erfinder: FINK, Helmut, 8010 Graz (AT); HOLLER, Walter, 8430 Leibnitz (AT)
(74) Vertreter: Sonn & Partner Patentanwälte

(56) Entgegenhaltungen:
- EP-A1- 2 450 865
- EP-A1- 2 530 654
- EP-A1- 2 624 231
- EP-A2- 1 088 286
- WO-A1-02/058012
- DE-A1-102004 002 892

## Beschreibung

Die Erfindung betrifft ein Handgerät zur Kontrolle eines Mauterfassungsgeräts in einem Fahrzeug, mit einer Sende- und Empfangseinrichtung zum Senden und Empfangen von Kommunikationssignalen, einer Steuereinheit für die Sende- und Empfangseinrichtung, einer Eingabeeinheit zum Eingeben von Eingabedaten und einer Anzeigeeinheit zum Anzeigen von Eingabe- bzw. Ausgabedaten, wobei eine Bilderfassungseinheit zur Erfassung von Bilddaten des Fahrzeugs vorgesehen ist, und die Bilderfassungseinheit zur Anzeige der Bilddaten mit der Anzeigeeinheit verbunden ist.

Weiters betrifft die Erfindung ein Verfahren zur Kontrolle eines Mauterfassungsgeräts in einem Fahrzeug mit einem Handgerät, wobei mit einer Sende- und Empfangseinrichtung des Handgeräts Kommunikationssignale zwischen dem Handgerät und dem Mauterfassungsgerät ausgetauscht werden, um in dem Mauterfassungsgerät vorgehaltene Mautdaten auszulesen, wobei Bilddaten des Fahrzeugs laufend mit einer Bilderfassungseinheit des Handgeräts erfasst und mit einer Anzeigeeinheit des Handgeräts angezeigt werden.

Handgeräte zur Kontrolle eines Mauterfassungsgeräts in einem Fahrzeug sind aus dem Stand der Technik bekannt. Die Handgeräte sind dafür ausgebildet, in dem Mauterfassungsgerät gespeicherte Daten auszulesen, um die korrekte Funktion des Mauterfassungsgeräts prüfen zu können. Beispielsweise sind in dem Mauterfassungsgerät Informationen über eine Fahrzeugkategorie, einen mit dem Fahrzeug zurückgelegten Streckenabschnitt, das Kennzeichen bzw. Nummernschild des Fahrzeugs oder eine Identifikationsnummer für das Mauterfassungsgerät gespeichert. Aus den gespeicherten Informationen wird letztlich die zu entrichtende Gebühr errechnet.

So offenbart die WO 02/058012 A1 eine mobile drahtlose Kommunikationseinrichtung zur Kommunikation mit einer OBU ("On Board Unit") eines Fahrzeugs, wobei die Kommunikationseinrichtung einen Sender und einen Empfänger für eine Funkwellen- oder Infrarotübertragung mit einer schmalen Sende- und Empfangskeule aufweist, um Fahrzeuge auch in größerer Entfernung gezielt selektieren zu können. Zum Anvisieren der Fahrzeuge weist die Kommunikationseinrichtung eine Visiereinheit auf.

Die EP 2 450 865 A1 betrifft eine mobile, auf einem Kontrollfahrzeug montierte Kontrollvorrichtung mit einem Geschwindigkeitssensor, einem Sensor zur Erfassung einer Fahrzeuggeometrie, einer Kamera zur Aufnahme von Bildern zu kontrollierender Fahrzeuge und einem DSRC-Sendeempfänger, wobei jedem Sensor, der Kamera und dem DSRC-Sendeempfänger ein unterschiedlicher Erfassungsbereich zugeordnet ist. Um einen Zusammenhang der mit den Sensoren, der Kamera und dem DSRC-Sendeempfänger erfassten Daten zu ermöglichen, werden die Geschwindigkeitsmessung, die Erfassung der Fahrzeuggeometrie, die Bildaufnahme und die DSRC-Kommunikation zusätzlich jeweils mit einem Zeitstempel versehen. Aus der Geschwindigkeitsmessung, der erfassten Fahrzeuggeometrie und der DSRC-Kommunikation in Verbindung mit dem Zeitstempel und den Erfassungsbereichen errechnet eine Auswerteeinrichtung, wann sich das zu kontrollierende Fahrzeug im Erfassungsbereich der Kamera befinden muss, und assoziiert diesen Rechenwert mit den aufgenommenen Bildern, um die mit den Sensoren und dem DSRC-Sendeempfänger erhaltenen Daten eindeutig einem aufgenommenen Fahrzeug zuordnen zu können. Die Vorrichtung ist nicht als Handgerät ausgebildet und ist komplex aufgebaut, um die erforderlichen Rechenoperationen durchzuführen.

Die EP 1 739 943 A1 betrifft ein Handgerät zur Datenverarbeitung, beispielsweise für die Erfassung von Verstößen gegen Verkehrsvorschriften, mit zumindest einer Datenverarbeitungseinheit, zumindest einer Eingabeeinrichtung für die Dateneingabe und/oder Bedienung des Handgeräts und zumindest einer Anzeigeeinrichtung für die Ausgabe von Bild- und/ oder Verarbeitungs- und/oder Steuerungsinformationen, wobei eine Anzeigeeinrichtung mit einer im Handgerät vorgesehenen digitalen Bilderfassungseinheit verbunden ist. Das Handgerät weist keine Kommunikationseinrichtung zur Kontrolle eines Mauterfassungsgeräts, insbesondere keine hierfür ausgebildete Sende- und Empfangseinrichtung zum Senden und Empfangen von Kommunikationssignalen auf.

Die EP 2 624 231 A1 offenbart ein System mit Aufzeichnungsfahrzeugen, welche einen Verstoß beispielsweise gegen eine Mautpflicht erkennen, Kontrollfahrzeugen, welche den Verstoß ahnden, und einem Deliktserver. Die Aufzeichnungsfahrzeuge erfassen die Daten eines Mauterfassungsgeräts mittels DSRC-Kommunikation, das KFZ-Kennzeichen und die Fahrzeugform des jeweils überprüfen Fahrzeugs und übermitteln im Falle eines festgestellten Verstoßes den Datensatz an den Deliktserver. Zudem übermitteln die Kontrollfahrzeuge ihre aktuellen Positionen an den Deliktserver, sodass dieser den jeweiligen Datensatz an jene Kontrollfahrzeuge senden kann, die sich in der Nähe des kontrollierten, den Verstoß verursachenden Fahrzeugs befinden. Ein Handgerät zur Kontrolle eines Mauterfassungsgeräts in einem Fahrzeug geht hieraus nicht hervor.

Die EP 1 879 151 A2 offenbart ein Kommunikationsverfahren zwischen einem Mauterfassungsgerät, beispielsweise in Form eines Mobiltelefons, und einer Kontrolleinrichtung, über einen hierfür eigens vorgesehenen Mobilfunkkanal eines Mobilfunknetzes. Die Größe des als Pico-Zelle ausgebildeten Funkabdeckungsbereichs der Kontrolleinrichtung wird mitunter dynamisch an die Geschwindigkeit und das Verkehrsaufkommen in dem Bereich angepasst, um eine zuverlässige Kommunikation zu gewährleisten.

Die bekannten Handgeräte weisen jedoch insbesondere den Nachteil auf, dass die Erfassung des Nummernschildes des überprüften Fahrzeuges manuell in einem eigenen Arbeitsschritt vorgenommen werden musste. Zudem ist die Zuordnung dieser manuell erfassten Merkmale zu den ausgelesenen Daten des Mauterfassungsgeräts umständlich. Die Erfassung der für die Kontrolle relevanten Daten bzw. die Durchführung der Kontrolle ist mit den bekannten Handgeräten besonders zeitaufwändig, wenn sie am ruhenden Fahrzeug, beispielsweise auf einem Parkplatz, von einer Person durchgeführt werden soll. Darüber hinaus ist nachteilig, dass die bekannten Handgeräte nicht mit den verschiedenen in Verwendung befindlichen Mauterfassungsgeräten kompatibel sind.

Die DE 10 2004 002 892 A1 betrifft eine Vorrichtung und ein Verfahren zur Durchführung eines Datentransfers für die Verrechnung von Gebühren und Bußgeldern, welche sich aus der Positionierung eines Fahrzeugs ergeben, und zur automatischen Ausfertigung von Strafzetteln. Hierfür sind eine Erfassungseinrichtung, welche Daten des Fahrzeughalters aus einem am Fahrzeug vorgesehenen Mittel bestimmt, eine Einrichtung zur Bestimmung deliktrelevanter Sachverhalte und eine Ausgabeeinrichtung zur Ausgabe eines Strafzettels vorgesehen. Die Erfassungseinrichtung kann eine Kamera aufweisen und mit einem Transpondersystem, beispielsweise einem Mauterfassungsgerät, zur Erhebung der Daten des Fahrzeughalters kommunizieren.

Die EP 1 088 286 A2 betrifft eine straßenseitige, beispielsweise als Handgerät ausgebildete Kontrolleinrichtung für die Kontrolle des ordnungsgemäßen Betriebs eines Mautgerätes in einem bewegten Fahrzeug. Die Kontrolleinrichtung verfügt hierfür unter anderem über Einrichtungen zum drahtlosen Informationsaustausch mit dem Mautgerät, zur Ermittlung der Fahrzeugklasse, zur Überprüfung der empfangenen und der selbst ermittelten Daten auf Plausibilität, zur zeitgerechten Aktivierung der Komponenten der Kontrolleinrichtung und zur Aufnahme des Nummernschilds eines passierenden Fahrzeugs für Beweiszwecke.

Die EP 2 530 654 A1 offenbart eine Fahrzeugeinrichtung mit einem mobilen Fahrzeuggerät zur Erhebung von Gebühren für ein Fahrzeug. Das Fahrzeuggerät weist eine Kommunikationsschnittstelle zur drahtlosen Übertragung von Fahrzeugdaten an eine außerhalb des Fahrzeugs angeordnete Registriereinrichtung eines Fahrzeuggebührensystems auf. Eine Leseeinrichtung des Fahrzeuggeräts empfängt drahtlos Fahrzeugdaten von einem am Fahrzeug befestigten Transponder, wenn das mobile Fahrzeuggerät in einer fahrzeugseitigen Aufnahmevorrichtung aufgenommen wird.

Die Erfindung hat daher zum Ziel, ein Handgerät der eingangs genannten Art zu schaffen, welches die aus dem Stand der Technik bekannten Nachteile vermeidet bzw. verringert. Das Handgerät soll auf für eine Bedienperson möglichst einfache und rasche Weise das Auslesen der Daten aus dem Mauterfassungsgerät und die Erfassung von optischen Merkmalen des das Mauterfassungsgerät aufweisenden Fahrzeugs, insbesondere die Erfassung des Nummernschilds, ermöglichen. Besonders bei der Überprüfung vieler abgestellter Fahrzeuge auf großen Parkplätzen soll eine effiziente Bedienung des Handgeräts ermöglicht werden.

Die Aufgabe wird dadurch gelöst, dass die Anzeigeeinheit in einem oberen Bereich ein erstes Anzeigefenster zur Anzeige eines ersten Bildausschnittes aufweist, die Anzeigeeinheit in einem unteren Bereich ein zweites Anzeigefenster zur Anzeige eines zweiten Bildausschnittes aufweist und die Anzeigeeinheit zwischen dem ersten Anzeigefenster und dem zweiten Anzeigefenster ein drittes Anzeigefenster aufweist, wobei die Sende- und Empfangseinrichtung in einer zum Senden und Empfangen von Kommunikationssignalen eingerichteten Ausrichtung zu dem Mauterfassungsgerät des Fahrzeugs angeordnet ist, wenn der erste Bildausschnitt in dem ersten Anzeigefenster das Mauterfassungsgerät aufweist, die Sende- und Empfangseinrichtung innerhalb eines maximalen Leseabstands zu dem Mauterfassungsgerät eines Fahrzeugs eines ersten Typs, insbesondere eines Personenkraftfahrzeuges, angeordnet ist, wenn der erste Bildausschnitt in dem ersten Anzeigefenster das Mauterfassungsgerät aufweist und der zweite Bildausschnitt in dem zweiten Anzeigefenster ein Nummernschild des Fahrzeugs des ersten Typs aufweist und wobei die Sende- und Empfangseinrichtung innerhalb eines maximalen Leseabstands zu dem Mauterfassungsgerät eines Fahrzeugs eines zweiten Typs, insbesondere eines Lastkraftwagens, angeordnet ist, wenn der erste Bildausschnitt in dem ersten Anzeigefenster das Mauterfassungsgerät aufweist und der zweite Bildausschnitt in dem dritten Anzeigefenster ein Nummernschild des Fahrzeugs des zweiten Typs aufweist. Das Handgerät weist somit eine Sendeeinrichtung/Empfangseinrichtung auf, mit welcher Kommunikationssignale zu dem Mauterfassungsgerät gesendet und von dem Mauterfassungsgerät empfangen werden. Gesteuert wird die Sendeeinrichtung/Empfangseinrichtung mittels einer Steuereinheit, die beispielsweise einen Mikroprozessor aufweist. Für die Bedienung des Handgeräts ist eine Eingabeeinheit, welche beispielsweise Tasten oder einen Touchscreen aufweist, vorgesehen. Die von dem überprüften Fahrzeug erfassten Daten und vorzugsweise auch die eingegebenen Informationen werden an einer Anzeigeeinheit, beispielsweise am Touchscreen der Eingabeeinheit, dargestellt. Um zusätzlich zum Auslesen des Mauterfassungsgerätes auch Bilddaten des zu überprüfenden Fahrzeugs automatisch erfassen und an der Anzeigeeinheit anzeigen zu können, ist eine Bilderfassungseinheit vorgesehen, die mit der Anzeigeeinheit verbunden ist. Die Bedienperson kann somit, vorzugsweise in einem einzigen Arbeitsschritt, die für die Kontrolle relevanten Daten aus dem Mauterfassungsgerät auslesen und die Bilddaten des Fahrzeugs erfassen. Die erfassten Bilddaten können zudem unmittelbar an der Anzeigeeinheit überprüft werden, sodass im Falle einer nicht zufriedenstellenden Erfassung der Bilddaten der Erfassungsvorgang sofort wiederholt werden kann, ohne dass die Bedienperson zu dem Fahrzeug zurückkehren muss. Die Bilderfassungseinheit ist vorzugsweise dafür ausgebildet, in einem für die Kommunikation mit dem Mauterfassungsgerät geeigneten Abstand des Handgeräts zumindest einen Großteil der Frontansicht des Fahrzeugs erfassen zu können. Die Bilddaten können allerdings auch zumindest einen Teil einer Seitenansicht des überprüften Fahrzeugs aufweisen.

Zudem weist die Anzeigeeinheit in einem oberen Bereich ein erstes Anzeigefenster zur Anzeige eines ersten Bildausschnittes auf. Somit kann die Bedienperson das Handgerät besonders effizient in Bezug auf das Mauterfassungsgerät ausrichten. Wenn die Bedienperson das Mauterfassungsgerät im ersten Anzeigefenster erkennt, ist ein Sende- bzw. Empfangskegel der Sende- und Empfangseinrichtung an dem Mauterfassungsgerät ausgerichtet. Insbesondere wenn der Sende- bzw. Empfangskegel günstiger Weise einen kleinen Öffnungswinkel aufweist, ermöglichst die Erkennung des Mauterfassungsgeräts im ersten Anzeigefenster auch unter beengten Platzverhältnissen, wie beispielsweise auf Parkplätzen, eine rasche und für die Kommunikation mit dem Mauterfassungsgerät geeignete Ausrichtung des Handgeräts. Das erste Anzeigefenster ist hierbei im Wesentlichen in jenem oberen Bereich der Anzeigeeinheit angeordnet, der einem Bereich der Fahrzeugfront, insbesondere mit der Windschutzscheibe, entspricht. Das Anzeigefenster kann verschiedene Formen aufweisen. Insbesondere kann das Anzeigefenster rechteckig oder kreisförmig ausgebildet sein.

Für die Positionierung des Handgeräts in Bezug auf das zu überprüfende Fahrzeug ist weiters vorgesehen, dass die Anzeigeeinheit in einem unteren Bereich ein zweites Anzeigefenster zur Anzeige eines zweiten Bildausschnittes aufweist, wobei die Sende- und Empfangseinrichtung innerhalb eines maximalen Leseabstands zu dem Mauterfassungsgerät eines Fahrzeugs eines ersten Typs, insbesondere eines Personenkraftfahrzeuges, angeordnet ist, wenn der erste Bildausschnitt in dem ersten Anzeigefenster das Mauterfassungsgerät aufweist und der zweite Bildausschnitt in dem zweiten Anzeigefenster ein Nummernschild des Fahrzeugs des ersten Typs aufweist. Auf diese Weise kann die Bedienperson den für die Kommunikation mit dem Mauterfassungsgerät geeigneten Abstand zwischen Handgerät und Fahrzeug besonders effizient bestimmen. Zudem ist hiermit sichergestellt, dass in diesem Abstand auch das Nummernschild das Fahrzeugs mit der Bilderfassungseinheit erfasst werden kann, ohne das Handgerät durch Schwenken oder eine sonstige Positionsänderung auf das Nummernschild zusätzlich ausrichten zu müssen. Das zweite Anzeigefenster ist zweckmäßiger Weise rechteckig oder quadratisch ausgebildet.

Für die Positionierung des Handgeräts bei der Überprüfung von Fahrzeugen mit unterschiedlichen Fahrzeugfronten ist zudem vorgesehen, dass die Anzeigeeinheit zwischen dem ersten Anzeigefenster und dem zweiten Anzeigefenster ein drittes Anzeigefenster aufweist, wobei die Sende- und Empfangseinrichtung innerhalb eines maximalen Leseabstands zu dem Mauterfassungsgerät eines Fahrzeugs eines zweiten Typs, insbesondere eines Lastkraftwagens, angeordnet ist, wenn der erste Bildausschnitt in dem ersten Anzeigefenster das Mauterfassungsgerät aufweist und der zweite Bildausschnitt in dem dritten Anzeigefenster ein Nummernschild des Fahrzeugs des zweiten Typs aufweist. Auf diese Weise kann die Bedienperson den für die Kommunikation mit dem Mauterfassungsgerät geeigneten Abstand zwischen dem Handgerät und einem Fahrzeug mit anderer Fahrzeugfront noch effizienter bestimmen. Die Anordnung eines dritten Anzeigefensters ist insbesondere dann zweckmäßig, wenn die Fahrzeugtypen unterschiedliche Abstände zwischen dem Mauterfassungsgerät und dem Nummernschild aufweisen. Durch das Vorsehen des dritten Anzeigefensters wird erreicht, dass die Bedienperson beim Überprüfen nebeneinander abgestellter Fahrzeuge mit unterschiedlichem Abstand zwischen Mauterfassungsgerät und Nummernschild die Position möglichst nicht verändern muss, um einerseits den maximalen Kommunikationsbereich nicht zu überschreiten und andererseits sicher das Nummernschild im zweiten bzw. dritten Anzeigefenster erfassen zu können. Auch das dritte Anzeigefenster ist zweckmäßiger Weise rechteckig oder quadratisch ausgebildet.

Gemäß einer Ausführungsform ist vorgesehen, dass die Bilderfassungseinheit eine von einer Sende- bzw. Empfangskeule der Sende- und Empfangseinrichtung verschiedene Aufnahmekeule zur Aufnahme der Bilddaten aufweist, wobei die Aufnahmekeule der Bilderfassungseinheit vorzugsweise einen größeren Öffnungswinkel als die Sende- und Empfangseinrichtung und/ oder eine gegenüber der Sende- und Empfangseinrichtung geneigte optische Achse aufweist. Die Sende- und Empfangseinrichtung weist, wie dem Fachmann bekannt ist, eine beispielsweise durch eine Antenne festgelegte Sende-/Empfangskeule auf. Diese Sende-/ Empfangskeule, bzw. die Hauptkeule des Senders/Empfängers, ist insbesondere kegelförmig ausgebildet. Der Sende- bzw. Empfangskegel weist vorzugsweise einen kleinen Öffnungswinkel auf, um nur die Daten aus einem bestimmten Mauterfassungsgerät und nicht unbeabsichtigt aus einem benachbarten Mauterfassungsgerät auszulesen. Zudem trägt ein kleiner Öffnungswinkel dazu bei, die in dem Handgerät, beispielsweise in Batterien oder Akkumulatoren, gespeicherte elektrische Energie effizienter einzusetzen. Weiters weist die Bilderfassungseinheit eine Erfassungskeule bzw. Aufnahmekeule auf, welche im Allgemeinen, jedoch nicht notwendigerweise, pyramidenförmig ist. Während, wie vorstehend beschrieben, der Öffnungswinkel der Sende- und Empfangseinrichtung vorzugsweise klein ist, ist der Öffnungswinkel der Bilderfassungseinheit bevorzugt vergleichsweise größer, um zumindest einen Großteil der Fahrzeugfront erfassen zu können. Alternativ oder zusätzlich ist die optische Achse bzw. die geometrische Mittelachse der Aufnahmekeule gegenüber jener der Sende-/Empfangskeule geneigt, insbesondere nach unten in Richtung zur Fahrbahn geneigt. Die optische Achse des Sende-/Empfangskegels ist hierbei im Wesentlichen auf das Mauterfassungsgerät gerichtet, welches sich im Allgemeinen im Bereich der Windschutzscheibe und somit besonders bei Lastkraftwagen im oberen Bereich des Fahrzeugs befindet.

Wenn im ersten Anzeigefenster das Mauterfassungsgerät und im zweiten oder dritten Anzeigefenster ein Nummernschild des Fahrzeugs ersichtlich ist, ist das Handgerät innerhalb eines maximalen Leseabstands und zudem in einem hinreichenden, nicht zu geringen Abstand zum auszulesenden Mauterfassungsgerät angeordnet. Innerhalb des maximalen Leseabstands ist die Sendeleistung bzw. die Empfangsempfindlichkeit der Sende- und Empfangseinrichtung für die Kommunikation mit dem Mauterfassungsgerät ausreichend hoch. Die Einhaltung eines nicht zu geringen Abstands zum auszulesenden Mauterfassungsgerät gewährleistet zudem, das auch kleine Bedienpersonen, welche das Handgerät gegenüber besonders hoch über der Fahrbahn angebrachten Mauterfassungsgeräten, wie beispielsweise bei Lastkraftwagen, nahe dem Fahrzeug für ein Auslesen zu tief positionieren würden, das Mauterfassungsgerät auslesen können. Dies wird durch den Öffnungswinkel der Sende-/ Empfangskeule des Handgeräts und die Positionierung des Handgeräts nicht zu nahe am Fahrzeug erzielt.

Die Kontrolle des Mauterfassungsgeräts lässt sich besonders effizient durchführen, wenn die Bilderfassungseinheit zur Erfassung der Bilddaten im zweiten und/oder dritten Anzeigefenster und die Steuereinheit zur Zuordnung dieser Bilddaten zu den empfangenen Kommunikationssignalen der Sende- und Empfangseinrichtung ausgebildet ist. Die Erfassung der Bilddaten im zweiten und/oder dritten Anzeigefenster gewährleistet, dass nur das Nummernschild und nicht unbeabsichtigt Aufdrucke oder Schriftzüge an der Fahrzeugfront erfasst werden. Die Bilddaten werden mittels der Steuereinheit den empfangenen Kommunikationssignalen automatisch zugeordnet, sodass nach korrekter Positionierung des Handgeräts und Auslösen des Kontrollvorgangs durch die Bedienperson, vorzugsweise in einem einzigen Arbeitsschritt, beispielsweise durch Betätigen eines Start-Knopfes, das Handgerät die Daten des Mauterfassungsgeräts und die Bilddaten erfassen und miteinander verknüpfen kann.

Um die Funktionen einzelner Anzeigefenster aktivieren und deaktivieren zu können, ist in einer weiteren Ausführungsform vorgesehen, dass die Eingabeeinheit ein Auswahlmodul zur Auswahl zwischen mehreren Anzeigemodi, mit Anzeige eines oder mehrerer Anzeigefenster, der Anzeigeeinheit aufweist. Das Auswahlmodul ermöglicht somit der Bedienperson auszuwählen, welches oder welche Anzeigefenster an der Anzeigeeinheit dargestellt werden, um die ihnen zugeordnete Funktion zu erfüllen. Somit können einzelne Anzeigefenster gezielt aktiviert werden, um die Überprüfung verschiedener Fahrzeugtypen effizient durchzuführen. Beispielsweise kann die Bedienperson auswählen, dass nur das erste, oder das erste und das zweite, oder das erste und das dritte Anzeigefenster verwendet werden sollen. Dies ist vorteilhaft, wenn Fahrzeuge unterschiedlichen Typs, welche dementsprechend unterschiedliche Abstände zwischen dem Mauterfassungsgerät und dem Nummernschild aufweisen, erfasst werden sollen. Vorteilhafterweise muss die Bedienperson den Abstand zu benachbarten Fahrzeugen nicht ändern, um die Kontrolle der Mauterfassungsgeräte vorzunehmen. Stattdessen kann über die Eingabeeinheit die Auswahl eines jeweils geeigneten Anzeigemodus, also der gewünschten aktiven Anzeigefenster, vorgenommen werden. Sollte der Bedienperson zu wenig Platz zur Verfügung stehen, um die gewünschten Bildausschnitte im ersten und zweiten bzw. im ersten und dritten Anzeigefenster anzuordnen, kann beispielsweise vorerst nur das erste Anzeigefenster aktiviert werden, um das Mauterfassungsgerät auszulesen, und anschließend in einem weiteren Arbeitsschritt das zweite oder dritte Anzeigefenster aktiviert werden, um das Nummernschild zu erfassen.

Die geeignete Positionierung des Handgeräts kann besonders einfach und rasch erfolgen, wenn die Anzeigeeinheit zur kontinuierlichen Anzeige veränderlicher Bilddaten des Fahrzeugs beim Ausrichten der Sende- und Empfangseinrichtung an dem Mauterfassungsgerät bzw. beim Einstellen des Leseabstands zwischen der Sende- und Empfangseinrichtung und dem Mauterfassungsgerät eingerichtet ist. Vorteilhafterweise ist die Anzeigeeinheit zur Anzeige der mit der Bilderfassungseinheit erfassten Bilddaten im Wesentlichen in Echtzeit eingerichtet.

Besonders günstig ist es, wenn die Steuereinheit mit einem Speicher zum Speichern der Bilddaten und/oder mit einem Sender zum Übertragen der Bilddaten an einen Empfänger und/oder mit einem Schrifterkennungsmodul zum Erkennen des Nummernschildes verbunden ist. Der Speicher für Bilddaten ermöglicht hierbei eine Überprüfung der aufgenommenen Fahrzeugansicht bzw. des Nummernschilds zu einem beliebigen Zeitpunkt, während ein eigens vorgesehener Sender die Übertragung der Bilddaten an einen externen Empfänger ermöglicht. Die Übertragung kann beispielsweise mittels bekannter Mobilfunkprotokolle erfolgen. Um die Bilddaten, insbesondere das Nummernschild, nicht nur als Bild erfassen zu können, kann im Handgerät ein Schrifterkennungsmodul vorgesehen sein, welches die Schriftzeichen am Nummernschild erkennt und in ein entsprechendes Datenformat, insbesondere ein Textformat, umwandelt. Auf diese Weise können die Schriftzeichen als Text gemeinsam mit den vom Mauterfassungsgerät gesendeten Daten weiterverarbeitet werden.

Um die Daten aus Mauterfassungsgeräten auslesen zu können, welche unterschiedliche Übertragungstechnologien verwenden, ist es zweckmäßig, dass die Sende- und Empfangseinrichtung einen Sender und einen Empfänger für Mikrowellensignale und/oder einen Sender und einen Empfänger für Infrarotsignale aufweist, welche zumindest teilweise überlappende Sende- bzw. Empfangskeulen aufweisen. Bevorzugt sind daher sowohl Mikrowellen-Sender-Empfänger als auch Infrarot-Sender-Empfänger vorgesehen. Es ist somit vorteilhafterweise nur ein einziges Handgerät erforderlich, um Mauterfassungsgeräte zu kontrollieren, die nur Mikrowellensignale oder nur Infrarotsignale senden und empfangen können. Da die Sendekegel (Sendekeulen) der beiden Sender und die Empfangskegel (Empfangskeulen) der beiden Empfänger zumindest teilweise überlappen, kann die Positionierung des Handgeräts in Bezug auf das Mauterfassungsgerät unabhängig von der Übertragungstechnologie vorgenommen werden.

Um eine Auswahl des jeweiligen Senders und Empfängers bzw. eine allfällige manuelle Umschaltung zwischen diesen durch die Bedienperson vermeiden zu können, ist zweckmäßigerweise vorgesehen, dass die Steuereinheit für einen gleichzeitigen Betrieb der Sender und Empfänger für Mikrowellensignale und Infrarotsignale und/oder für eine automatische Umschaltung zwischen dem Betrieb des Senders und Empfängers für Mikrowellensignale und dem Betrieb des Senders und Empfängers für Infrarotsignale ausgebildet ist. Bei einem gleichzeitigen Betrieb beider Sender und Empfänger sind vorteilhafterweise keine Mittel zur Umschaltung im Handgerät erforderlich. Andererseits bietet die Umschaltung den Vorteil eines geringeren Energieverbrauchs, da jeweils nur ein Sender und ein Empfänger betrieben wird. Es ist insbesondere für den Fall der Umschaltung günstig, wenn zunächst Prüfsignale von einem ersten der beiden Sender gesendet werden, und nur dann, wenn hierdurch auf keinen Verbindungsaufbau geschlossen werden kann, Prüfsignale des zweiten der beiden Sender gesendet werden. Alternativ zu den Prüfsignalen kann die Übertragung auch mit den eigentlichen Nutzinformationen gestartet und gegebenenfalls umgeschaltet werden.

Besonders günstig ist zudem, wenn die Steuereinheit für einen mehrfach aufeinanderfolgenden Betrieb zumindest eines der Sender und des zugehörigen Empfängers ausgebildet ist. Demgemäß wird das Senden und Empfangen mit dem gleichen Sender und Empfänger zumindest einmal automatisch wiederholt, wenn der Verbindungsaufbau davor gescheitert ist. Auf diese Weise wird die Wahrscheinlichkeit einer erfolgreichen Kommunikation zwischen der Sende- und Empfangseinrichtung und dem Mauterfassungsgerät erhöht, ohne dass die Bedienperson hierfür zusätzliche Arbeitsschritte vornehmen muss.

Wenn die Steuereinheit mit einer Ausgabeeinheit zum Signalisieren einer erfolgreichen oder fehlgeschlagenen Kommunikation zwischen der Sende- und Empfangseinrichtung und dem Mauterfassungsgerät des Fahrzeugs verbunden ist, wird die Bedienperson unverzüglich darüber informiert, ob die Daten aus dem Mauterfassungsgerät ausgelesen werden konnten. Somit kann die Bedienperson im Falle einer erfolgreichen Kommunikation unverzüglich mit der Kontrolle des Mauterfassungsgeräts des nächsten Fahrzeugs fortfahren, oder im Falle einer fehlgeschlagenen Kommunikation die Position in Bezug auf das Mauterfassungsgerät verändern und einen neuen Kommunikationsversuch starten. Die Ausgabeeinheit kann hierfür optische, akustische und/oder fühlbare, beispielsweise vibrierende, Vorrichtungen aufweisen. Insbesondere kann die Signalisierung einer erfolgreichen und einer fehlgeschlagenen Kommunikation mittels unterschiedlicher Signaltöne erfolgen.

Die erfindungsgemässe Aufgabe wird zudem durch ein Verfahren der eingangs angeführten Art gelöst, bei welchem die Winkellage des Handgeräts so lange verändert wird, bis ein das Mauterfassungsgerät enthaltender Bildausschnitt in einem ersten Anzeigefenster in einem oberen Bereich der Anzeigeeinheit angezeigt wird, um das Handgerät in einer zum Senden und Empfangen von Kommunikationssignalen eingerichteten Ausrichtung zu dem Mauterfassungsgerät des Fahrzeugs zu positionieren und bei welchem der Abstand zwischen dem Handgerät und dem Fahrzeug so lange verändert wird, bis der das Mauterfassungsgerät enthaltende Bildausschnitt im ersten Anzeigefenster der Anzeigeeinheit angezeigt wird und entweder ein Nummernschild des Fahrzeugs eines ersten Typs, insbesondere eines Personenkraftfahrzeuges, in einem zweiten Anzeigefenster in einem unteren Bereich der Anzeigeeinheit angezeigt wird, um das Handgerät innerhalb eines maximalen Leseabstands zu dem Mauterfassungsgerät des Fahrzeugs des ersten Typs zu positionieren oder ein Nummernschild des Fahrzeugs eines zweiten Typs, insbesondere eines Lastkraftwagens, in einem zwischen dem ersten Anzeigefenster und dem zweiten Anzeigefenster angeordneten dritten Anzeigefenster der Anzeigeeinheit angezeigt wird, um das Handgerät innerhalb eines maximalen Leseabstands zu dem Mauterfassungsgerät des Fahrzeugs des zweiten Typs zu positionieren. Auf diese Weise können zusätzlich zu den aus dem Mauterfassungsgerät ausgelesenen Daten Bilddaten erfasst und beispielsweise gemeinsam mit den ausgelesenen Daten gespeichert oder an eine externe Einrichtung gesendet werden. Die Bilddaten, deren Inhalt an der Anzeigeeinheit überprüft werden kann, sind insbesondere dann als Beweismittel verwendbar, wenn die Kontrolle ergab, dass das Mauterfassungsgerät nicht korrekt funktioniert bzw. die erforderlichen Mautgebühren nicht entrichtet wurden. Die Bilddaten weisen zumindest einen Ausschnitt einer Frontansicht des Fahrzeugs, gegebenenfalls zudem einen Ausschnitt einer Seitenansicht des Fahrzeugs, auf. Die laufende Erfassung und Anzeige der Bilddaten ermöglicht es der Bedienperson, das Handgerät in Bezug auf das Mauterfassungsgerät so auszurichten, dass das Mauterfassungsgerät im ersten Anzeigefenster positioniert ist. Auf diese Weise wird selbst bei Sende- und Empfangskegeln der Sende- und Empfangseinrichtung mit kleinem Öffnungswinkel bzw. kleinem Sende- und Empfangswinkel im Normalfall eine zuverlässige Kommunikation mit dem Mauterfassungsgerät sichergestellt. Voraussetzung hierfür ist, dass der Abstand zum Mauterfassungsgerät nicht zu groß gewählt wurde.

Beispielsweise werden die Bilddaten des Fahrzeuges laufend erfasst und an einer Anzeigeeinheit des Handgeräts angezeigt, wobei der Abstand zwischen dem Handgerät und dem Fahrzeug so lange verändert wird, bis ein das Mauterfassungsgerät enthaltender Bildausschnitt in einem ersten Anzeigefenster der Anzeigeeinheit angezeigt wird und ein Nummernschild des Fahrzeugs in einem zweiten Anzeigefenster der Anzeigeeinheit angezeigt wird, um das Handgerät innerhalb eines maximalen Leseabstands zu dem Mauterfassungsgerät zu positionieren. Es wird somit laufend ein erster Bildausschnitt in einem ersten Anzeigefenster der Anzeigeeinheit und ein zweiter Bildausschnitt in einem zweiten Anzeigefenster der Anzeigeeinheit angezeigt. Die Bedienperson richtet für die Kontrolle das Handgerät in Bezug auf das zu überprüfende Fahrzeug derart aus, dass das Mauterfassungsgerät im ersten Anzeigefenster positioniert ist und variiert sodann den Abstand zum Fahrzeug bis zusätzlich das Nummernschild des Fahrzeugs im zweiten Anzeigefenster positioniert ist. Auf diese Weise ist, abgesehen von externen Störungen der Signalübertragung, eine zuverlässige Kommunikation mit dem Mauterfassungsgerät und eine gleichzeitige Erfassung der Bilddaten des Fahrzeugs gewährleistet. Insbesondere muss die Bedienperson hierdurch den Kontrollvorgang nicht mit unterschiedlichen Positionen ausprobieren.

Besonders günstig ist es, wenn die Bilddaten im zweiten Anzeigefenster oder im dritten Anzeigefenster erfasst, insbesondere mit einem Schrifterkennungsmodul erkannt werden, und den Kommunikationssignalen zugeordnet werden. Hierdurch werden einerseits die besonders aussagekräftigen Bilddaten, im Wesentlichen das Nummernschild, erfasst, andererseits wird die Datenmenge gering gehalten, wenn nur die Bilddaten im zweiten Anzeigefenster oder im dritten Anzeigefenster erfasst werden. Hierbei ist es besonders vorteilhaft, wenn die Bilddaten bzw. das Nummernschild mit einem Schrifterkennungsmodul verarbeitet und als Dateninformation, insbesondere Textinformation, den empfangenen Kommunikationssignalen zugeordnet werden.

Um den Kontrollvorgang rasch und zuverlässig durchführen zu können ist es günstig, wenn ein Fehlschlagen der Kommunikation zwischen dem Handgerät und dem Mauterfassungsgerät des Fahrzeugs mittels einer Ausgabeeinheit und/oder mittels der Anzeigeeinheit signalisiert wird, um das Handgerät für einen nächsten Kommunikationsversuch zu dem Mauterfassungsgerät neu, insbesondere näher, zu positionieren. Das Handgerät kann für den nächsten Kommunikationsversuch aber auch seitlich zum Fahrzeug in einem eventuell besser geeigneten Winkel positioniert werden. Sollte die geänderte Position keine gleichzeitige Erfassung der Daten des Mauterfassungsgeräts und der gewünschten Bilddaten ermöglichen, kann die Bedienperson das Handgerät zunächst derart ausrichten, dass das Mauterfassungsgerät im ersten Anzeigefenster enthalten ist und die Kommunikation mit dem Mauterfassungsgerät initiieren und danach das Handgerät derart ausrichten, dass die gewünschten Bilddaten bzw. das Nummernschild im zweiten Anzeigefenster enthalten ist und die Erfassung der Bilddaten initiieren.

Um den Kontrollvorgang rasch und zuverlässig durchführen zu können ist es zudem günstig, wenn eine erfolgreiche Kommunikation zwischen dem Handgerät und dem Mauterfassungsgerät des Fahrzeugs mittels einer Ausgabeeinheit und/oder mittels der Anzeigeeinheit signalisiert wird. Wenn die Bedienperson das Signal für eine erfolgreiche Kommunikation wahrnimmt, kann sie unverzüglich mit der Kontrolle anderer Mauterfassungsgeräte fortfahren.

Die Erfindung ist durch den Gegenstand der unabhängigen Ansprüche 1 und 10 definiert. Bevorzugte Ausführungsformen sind den abhängigen Ansprüchen zu entnehmen.

Die Erfindung wird im Folgenden anhand von nicht einschränkenden Ausführungsbeispielen unter Bezugnahme auf die Zeichnungen noch weiter erläutert. Es zeigen:
Fig. 1 ein Blockschaltbild eines Handgeräts gemäß der Erfindung;
Fig. 2 eine beispielhafte Positionierung des Handgeräts in Bezug auf ein Fahrzeug eines ersten Typs;
Fig. 3A und 3B die Anzeige des Fahrzeugs des ersten Typs an der Anzeigeeinheit das Handgeräts, aus unterschiedlichen Entfernungen des Handgeräts zum Fahrzeug;
Fig. 4 eine beispielhafte Positionierung des Handgeräts in Bezug auf ein Fahrzeug eines zweiten Typs;
Fig. 5A und 5B die Anzeige des Fahrzeugs des zweiten Typs an der Anzeigeeinheit das Handgeräts, aus unterschiedlichen Entfernungen des Handgeräts zum Fahrzeug; und
Fig. 6A und 6B beispielhafte Positionierungen des Handgeräts in Bezug auf ein Fahrzeug mit seitlich montiertem Nummernschild.

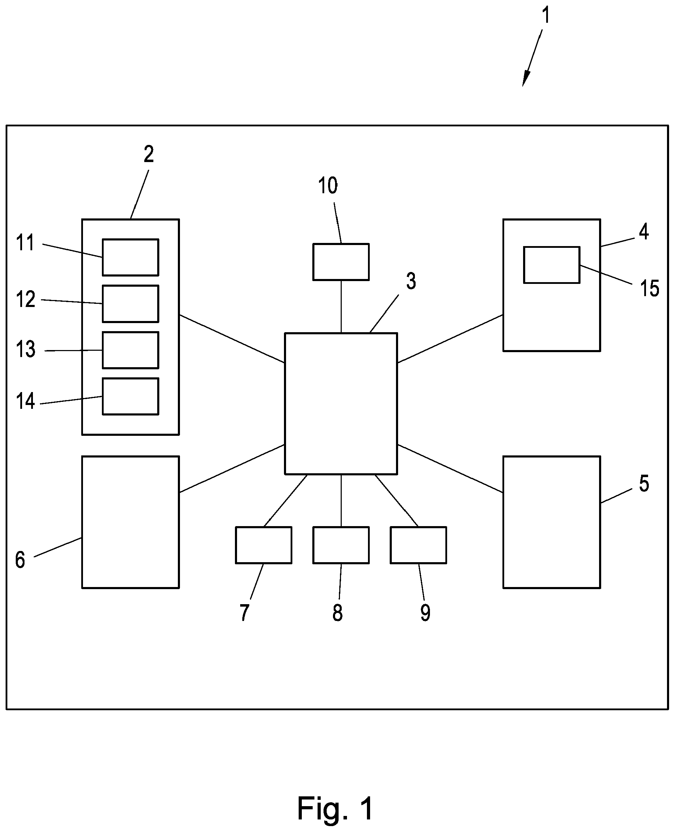

Fig. 1 zeigt beispielhaft ein Blockschaltbild eines Handgeräts 1 gemäß der Erfindung mit einer Sende- und Empfangseinrichtung 2 zum Senden und Empfangen von Kommunikationssignalen, einer Steuereinheit 3 für die Sende- und Empfangseinrichtung 2, einer Eingabeeinheit 4 zum Eingeben von Eingabedaten und einer Anzeigeeinheit 5 zum Anzeigen von Eingabe- bzw. Ausgabedaten, sowie mit einer Bilderfassungseinheit 6 zur Erfassung von Bilddaten eines zu überprüfenden Fahrzeugs. Die Bilderfassungseinheit 6 ist zur Anzeige der Bilddaten an der Anzeigeeinheit 5 mit dieser, vorzugsweise über die Steuereinheit 3 verbunden. Die Steuereinheit 3 weist im Allgemeinen einen Mikroprozessor auf, der die Funktionen des Handgeräts 1 steuert, und mit welchem vorzugsweise auch die übrigen Module des Handgeräts 1 verbunden sind. Die Steuereinheit 3 ist vorzugsweise mit einem Speicher 7 zum Speichern der Bilddaten und/oder mit einem Sender 8 zum Übertragen der Bilddaten an einen nicht dargestellten externen Empfänger und/oder mit einem Schrifterkennungsmodul 9 zum Erkennen eines Nummernschildes des zu überprüfenden Fahrzeugs verbunden. Zudem kann die Steuereinheit 3 mit einer Ausgabeeinheit 10 zum Signalisieren einer erfolgreichen oder fehlgeschlagenen Kommunikation zwischen der Sende- und Empfangseinrichtung 2 und dem Mauterfassungsgerät des Fahrzeugs verbunden sein. Wenn die Ausgabeeinheit 10 nur für eine optische Signalisierung ausgebildet ist, kann sie auch in die Anzeigeeinheit 5 integriert sein oder durch diese ersetzt werden. Die Eingabeeinheit 4 und die Anzeigeeinheit 5 können, wie in Fig. 1 angedeutet, von einander getrennt als separate Einheiten vorgesehen sein, oder in einer nicht dargestellten Ausführungsform als gemeinsame Einheit, beispielsweise als Touchscreen, ausgebildet sein. Die Eingabeeinheit 4 weist zudem ein Auswahlmodul 15 zur Auswahl zwischen mehreren Anzeigemodi der Anzeigeeinheit 5 auf. Durch Auswahl mit dem Auswahlmodul 15 können an der Anzeigeeinheit 5 verschiedene Anzeigefenster dargestellt bzw. aktiviert werden, wodurch das Handgerät 1 besonders einfach positioniert werden kann, wie später ausführlicher beschrieben wird.

Wie zudem aus Fig. 1 ersichtlich ist, weist die Sende- und Empfangseinrichtung 2 einen Sender 11 und einen Empfänger 12 für Mikrowellensignale und einen Sender 13 und einen Empfänger 14 für Infrarotsignale auf, die somit ebenfalls von der Steuereinheit 3 gesteuert werden. Vorzugsweise kann die Steuereinheit 3 die beiden Sender 11, 13 gleichzeitig oder einzeln ansteuern und dementsprechend die beiden Empfänger 12, 14 gleichzeitig oder einzeln auf den Empfang von Daten aus dem Mauterfassungsgerät prüfen. Insbesondere kann die Steuereinheit 3 jeden Sender 11, 13 mehrmals hintereinander ansteuern, sofern die Kommunikation mit dem Mauterfassungsgerät bis dahin erfolglos verlief, wobei vorzugsweise für die Prüfung einer erfolgversprechenden Kommunikation Prüfsignale gesendet werden. Dies ist unabhängig davon, ob die beiden Sender 11, 13 gleichzeitig betrieben werden. Wenn die Steuereinheit 3 zunächst nur einen der beiden Sender 11, 13 betreibt, ist die Steuereinheit 3 dazu ausgebildet, nach insbesondere mehreren aufeinanderfolgenden erfolglosen Versuchen Daten von dem Mauterfassungsgerät zu erhalten, den jeweils anderen Sender 13, 11 zu betreiben, um zu versuchen mit diesem anderen Sender 13, 11 die Kommunikation erfolgreich herzustellen.

Die Bilderfassungseinheit 6 ist vorzugsweise eine digitale Kamera, mit welcher Bilddaten kontinuierlich erfasst werden, um an der Anzeigeeinheit 5 kontinuierlich dargestellt zu werden. Für die Erfassung der Bilddaten in der Nacht oder allgemein in dunkler Umgebung, weist das Handgerät 1 vorzugsweise eine in den Figuren nicht dargestellte Beleuchtungseinrichtung, beispielsweise LED-Leuchtmittel, auf.

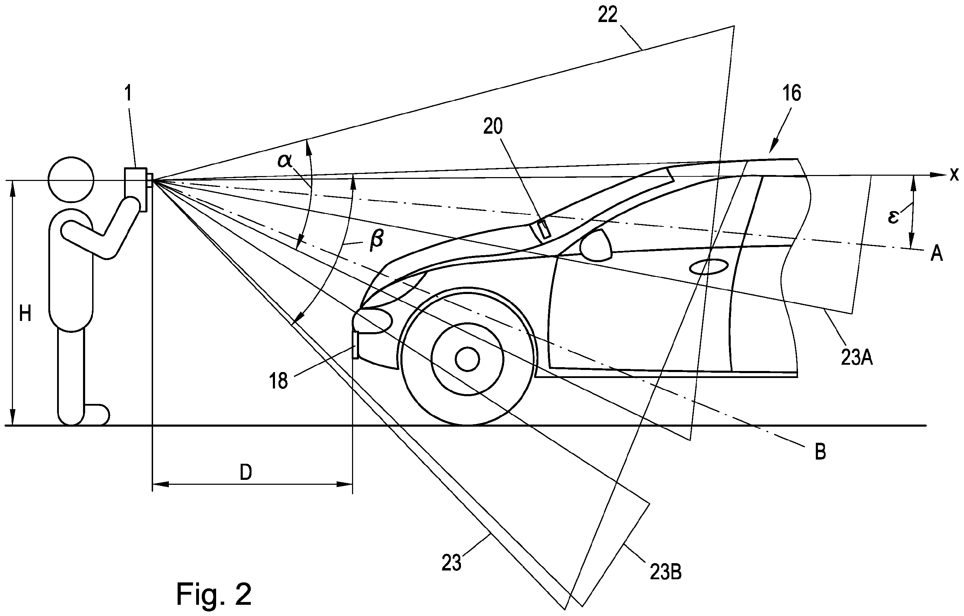

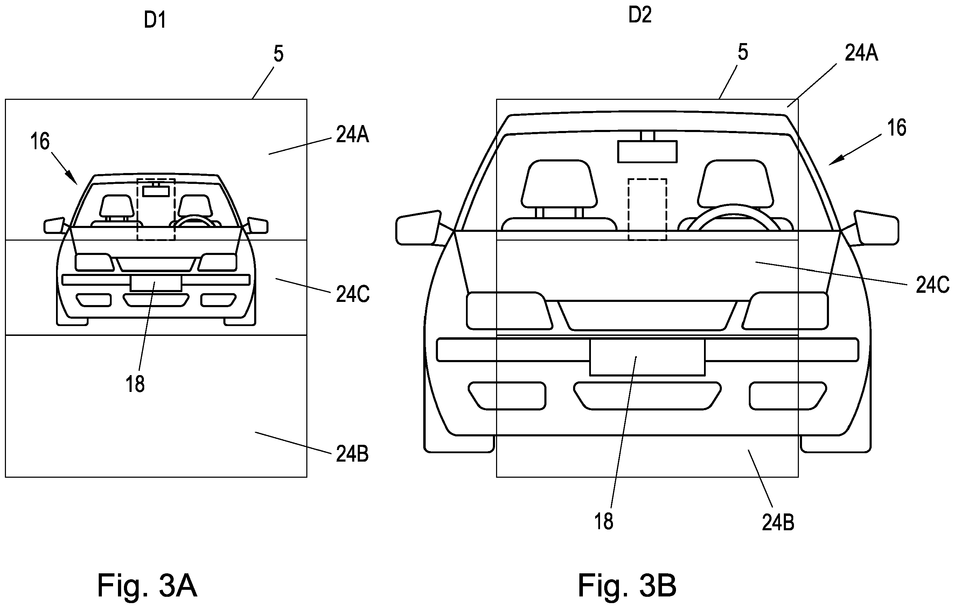

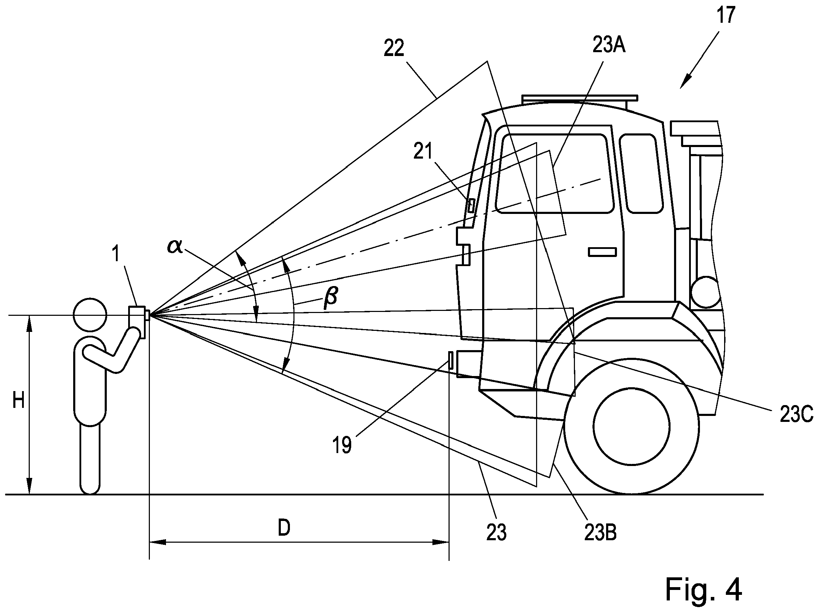

Die Fig. 2 und 4 veranschaulichen die Positionierung des Handgeräts 1 in Bezug auf zwei unterschiedliche Fahrzeuge 16, 17, wobei das Fahrzeug 16 eines ersten Typs in Fig. 2 im Vergleich zu dem Fahrzeug 17 eines zweiten Typs in Fig. 4 einen sich deutlich nach vorne erstreckenden Motorbereich und ein tiefer angeordnetes Nummernschild 18 aufweist. Für den Datenaustausch mit dem Mauterfassungsgerät 20 des Fahrzeugs 16 oder dem Mauterfassungsgerät 21 des Fahrzeugs 17 weist das Handgerät 1 die Sender 11, 13 mit einem Sendekegel 22 mit einem Öffnungswinkel α auf. Um zudem die Bilddaten des Fahrzeugs 16, 17 erfassen zu können, weist das Handgerät 1 die Bilderfassungseinheit 6 mit einer Aufnahmekeule 23 (bzw. Aufnahmekegel 23) mit einem Öffnungswinkel β auf. Wie aus den Fig. 2 und 4 ersichtlich ist, überlappen der Sendekegel 22 und der Aufnahmekegel 23, sodass das Mauterfassungsgerät 20, 21 von beiden Kegeln 22, 23 gleichzeitig erfasst werden kann. Der Öffnungswinkel β des Aufnahmekegels 23 der Bilderfassungseinheit 6 ist in der gezeigten Ausführung größer als der Öffnungswinkel α des Sendekegels 22. Zudem ist die optische Achse A, d.h. die geometrische Mittelachse, des Sendekegels 22 gegenüber der optischen Achse B des Aufnahmekegels 23 nach unten geneigt. Um für den Empfang der Daten aus dem Mauterfassungsgerät 20, 21 und für die Erfassung der Bilddaten das Handgerät 1 in Bezug zu dem Fahrzeug 16, 17 in einem günstigen Abstand D und in einer günstigen Höhe H positionieren zu können, weist die Anzeigeeinheit 5 vorzugsweise drei Anzeigefenster 24A, 24B, 24C auf (z.B. Fig. 3A). Die Anzeigefenster 24A, 24B, 24C enthalten somit Bildausschnitte des mit der Bilderfassungseinheit 6 erfassten Bildes, sodass jedem der Anzeigefenster 24A, 24B, 24C ein Teil des Aufnahmekegels 23 zugeordnet ist. Insbesondere ist dem obersten Anzeigefenster 24A ein Aufnahmebereich 23A und dem unteren Anzeigefenster 24B ein Aufnahmebereich 23B (Fig. 2) sowie dem mittleren Anzeigefenster 24C ein Aufnahmebereich 23C (Fig. 4) zugeordnet. Wenn nun das Mauterfassungsgerät 20, 21 in dem obersten Anzeigefenster 24A ersichtlich ist, befindet sich das Mauterfassungsgerät 20, 21 wegen der Überlappung des Sendekegels 22 mit dem Aufnahmebereich 23A auch im Sendekegel 22, sodass die Daten aus dem Mauterfassungsgerät 20, 21 ausgelesen werden können. Wenn zudem das Nummernschild 18, 19 in dem unteren Anzeigefenster 24B oder dem mittleren Anzeigefenster 24C ersichtlich ist, kann zudem auch das Nummernschild 18, 19 erfasst und den ausgelesenen Daten zugeordnet werden. Die geeignete Positionierung des Handgeräts 1 umfasst insbesondere auch eine geeignete Neigung des Handgeräts 1, sodass die optische Achse A in Bezug auf eine horizontale Richtung x einen Neigungswinkel ε (vgl. Fig. 2) einnimmt. Die beiden unteren Anzeigefenster 24B, 24C ermöglichen insbesondere die Erfassung der Nummernschilder 18, 19, die in unterschiedlichen Abständen zur Fahrbahn angeordnet sind, ohne dass die Bedienperson hierfür vom Fahrzeug weiter weg oder näher zu diesem hin gehen muss.

Die Fig. 3A und 3B zeigen die Anzeige des Fahrzeugs 16 des ersten Typs an der Anzeigeeinheit 5 das Handgeräts 1, aus unterschiedlichen Entfernungen D1, D2 des Handgeräts 1 zum Fahrzeug 16. Die Anzeigeeinheit 5 weist die drei Anzeigefenster 24A, 24B, 24C auf, die im Vergleich zur Darstellung in den Fig. 3A und 3B auch kleiner ausgebildet sein können. Insbesondere können die Anzeigefenster 24B, 24C geringfügig größer als ein Nummernschild des Fahrzeugs 16 ausgebildet sein. Das Handgerät 1 ist in Bezug auf das Fahrzeug 16 des ersten Typs dann günstig positioniert, wenn das Mauterfassungsgerät 20, welches beispielsweise im strichliert dargestellten Bereich montiert ist, im Anzeigefenster 24A und das Nummernschild 18 im Anzeigefenster 24B erkennbar ist, da das Nummernschild 18 relativ weit unten am Fahrzeug 16 angebracht ist. In Fig. 3A ist der Abstand D1 zum Fahrzeug 16 zu groß gewählt, beispielsweise vier Meter, sodass der maximale Leseabstand zu dem Mauterfassungsgerät 20 überschritten ist und das Auslesen des Mauterfassungsgeräts 20 fehlschlagen wird. In Fig. 3B hat die Bedienperson den Abstand D2 zum Fahrzeug 16 soweit verringert, beispielsweise auf zwei Meter, dass nun das Nummernschild 18 im Anzeigefenster 24B erscheint, sodass in einem Arbeitsschritt sowohl das Mauterfassungsgerät 20 ausgelesen als auch das Nummernschild 18 erfasst werden kann.

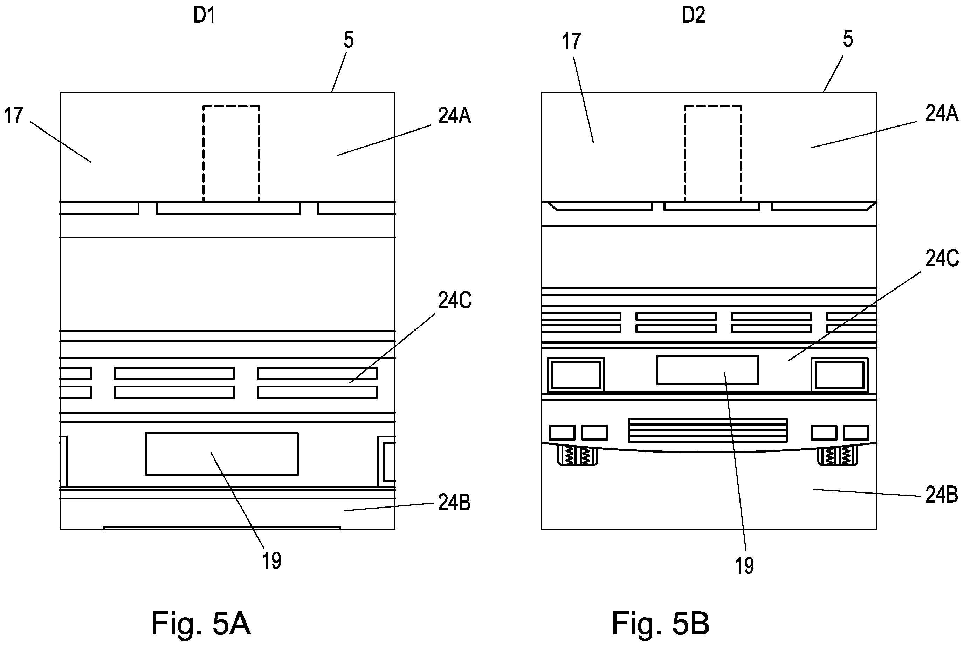

In den Fig. 5A und 5B ist ein Beispiel mit einem Fahrzeug 17 eines zweiten Typs dargestellt, dessen Nummernschild 19 höher als das Nummernschild 18 des Fahrzeugs 16 montiert ist. Hierdurch ergeben sich andere Anforderungen an den Abstand zum Fahrzeug 17. Das Handgerät 1 ist in Bezug auf das Fahrzeug 17 des zweiten Typs dann günstig positioniert, wenn das Mauterfassungsgerät 21, welches beispielsweise im strichliert dargestellten Bereich montiert ist, im Anzeigefenster 24A und das Nummernschild 19 im Anzeigefenster 24B oder im Anzeigefenster 24C erkennbar ist. In Fig. 5A ist der Abstand D1 beispielsweise mit 1,2 Meter gewählt, sodass das Nummernschild 19 erfasst werden kann, wenn die Bedienperson das Anzeigefenster 24B mit dem Auswahlmodul 15 der Eingabeeinheit 4 aktiviert. Alternativ kann das Nummernschild 19 in einem größeren Abstand D2 von beispielsweise zwei Metern erfasst werden, wenn die Bedienperson das Anzeigefenster 24C aktiviert, siehe Fig. 5B.

Es ist somit vorteilhaft, abhängig vom Fahrzeugtyp einzelne Anzeigefenster 24B, 24C zu aktivieren bzw. zu deaktivieren. So ist es sinnvoll, für Fahrzeuge 16 des ersten Typs, insbesondere Personenkraftfahrzeuge, das Anzeigefenster 24C zu deaktivieren, um den maximalen Leseabstand zum Mauterfassungsgerät 20 nicht zu überschreiten. Bei Fahrzeugen 17 des zweiten Typs, insbesondere Lastkraftwagen, kann bedarfsweise jeweils eines der beiden Anzeigefenster 24B, 24C aktiviert werden, sodass die Bedienperson durch gezielte Auswahl eines der Anzeigefenster 24B, 24C einen bereits eingenommenen Abstand zum Fahrzeug 17 möglicherweise nicht ändern muss, um das Nummernschild 19 zu erfassen.

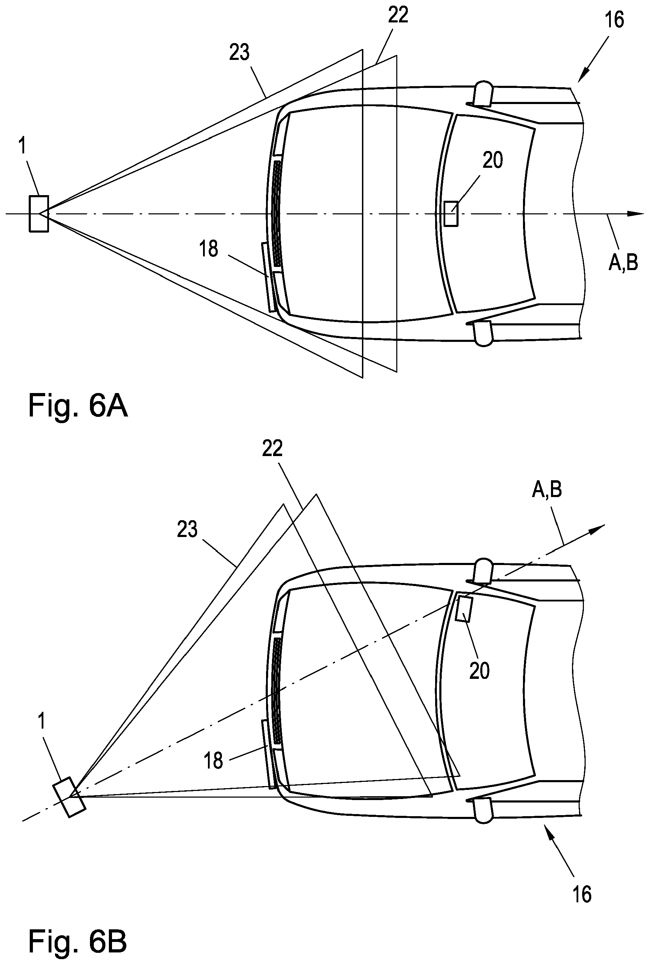

Aus den Fig. 6A und 6B ist am Beispiel von Fahrzeug 16 ersichtlich, dass die Kontrolle von Mauterfassungsgeräten 20 mit dem Handgerät 1 auch dann durchführbar ist, wenn das Mauterfassungsgerät 20 und das Nummernschild 18 nicht horizontal in der Mitte des Fahrzeugs 16 montiert sind. Beispielsweise ist in Fig. 6A das Nummernschild 18 seitlich am Fahrzeug 16 montiert, und in Fig. 6B zusätzlich das Mauterfassungsgerät 20 an der gegenüberliegenden Seite des Fahrzeugs 16 montiert. In beiden Fällen kann durch geeignete Positionierung des Handgeräts 1 die Kontrolle rasch und einfach durchgeführt werden.

Um den Kontrollvorgang durchzuführen, ist es somit besonders günstig, das Handgerät derart zu positionieren, dass das Mauterfassungsgerät 20, 21 im Anzeigefenster 24A und das Nummernschild 18, 19 je nach Typ des Fahrzeugs 16, 17 im Anzeigefenster 24B und/oder 24C ersichtlich ist. Die Bedienperson kann sodann mittels einer Eingabe an der Eingabeeinheit 4 die Kommunikation mit dem Mauterfassungsgerät 20, 21 starten. Hierfür werden vom Handgerät 1 beispielsweise Prüfsignale gesendet, die vom Mauterfassungsgerät 20, 21 entsprechend beantwortet werden, wenn das Handgerät 1 geeignet zu dem Fahrzeug 16, 17 ausgerichtet ist. Diese Beantwortung kann der Bedienperson mittels einer Ausgabeeinheit 10 signalisiert werden. Das Handgerät 1 startet dann den Auslesevorgang der Daten aus dem Mauterfassungsgerät 20, 21 und die Erfassung der Bilddaten, insbesondere des Nummernschilds 18, 19. Die erfolgreich Durchführung hiervon kann ebenfalls der Bedienperson mittels der Ausgabeeinheit 10 signalisiert werden. Mittels einer weiteren Eingabe der Bedienperson können die erhaltenen Daten im Speicher 7 gespeichert, mit dem Sender 8 übertragen und/oder mit einem Schrifterkennungsmodul 9 erfasst werden.

Fallweise wird es nicht möglich sein, das Handgerät 1 derart zu positionieren, dass das Mauterfassungsgerät 20, 21 im Anzeigefenster 24A und das Nummernschild 18, 19 im Anzeigefenster 24B oder 24C ersichtlich ist. In diesem Fall aktiviert die Bedienperson zunächst das oberste Anzeigefenster 24A, richtet das Handgerät 1 derart aus, dass das Mauterfassungsgerät 20, 21 in diesem Anzeigefenster 24A ersichtlich ist und startet die Kommunikation mit dem Mauterfassungsgerät 20, 21. Danach aktiviert die Bedienperson das untere oder mittlere Anzeigefenster 24B, 24C und richtet das Handgerät 1 derart aus, dass das Nummernschild 18, 19 in diesem Anzeigefenster 24B, 24C ersichtlich ist und startet die Erfassung der Bilddaten. Alternativ ist es auch möglich, dass zunächst das Nummernschild 18, 19 erfasst wird und danach die Ausrichtung des Mauterfassungsgerätes 20, 21 am oberen Anzeigefenster 24A vorgenommen wird. Die Eingabeeinheit 4 ist jedoch auch dafür ausgebildet, das Nummernschild 18, 19 nötigenfalls manuell, ohne Nutzung der Bilderfassungseinheit 6, eingeben zu können.

Fallweise kann es vorkommen, dass das Handgerät 1 weder so positioniert werden kann, dass das Mauterfassungsgerät 20, 21 im Anzeigefenster 24A noch dass das Nummernschild 18, 19 im Anzeigefenster 24B oder 24C ersichtlich ist. In diesem Fall schätzt die Bedienperson die Positionierung des Handgeräts 1 und startet die Kommunikation mit dem Mauterfassungsgerät 20, 21. Gegebenenfalls muss für eine erfolgreiche Kommunikation die Position des Handgeräts 1 mehrmals geändert werden. Um die Bedienperson bei dieser Abschätzung zu unterstützen, kann ein Feldstärke-Indikator herangezogen werden. Das Nummernschild 18, 19 kann ebenfalls mittels mehrerer Versuche mit der Bilderfassungseinheit 6 erfasst werden oder manuell eingegeben werden.

## Patentansprüche

1. Handgerät (1) zur Kontrolle eines Mauterfassungsgeräts (20, 21) in einem Fahrzeug (16, 17), mit einer Sende- und Empfangseinrichtung (2) zum Senden und Empfangen von Kommunikationssignalen, einer Steuereinheit (3) für die Sende- und Empfangseinrichtung (2), einer Eingabeeinheit (4) zum Eingeben von Eingabedaten und einer Anzeigeeinheit (5) zum Anzeigen von Eingabe- bzw. Ausgabedaten, wobei eine Bilderfassungseinheit (6) zur Erfassung von Bilddaten des Fahrzeugs (16, 17) vorgesehen ist, und die Bilderfassungseinheit (6) zur Anzeige der Bilddaten mit der Anzeigeeinheit (5) verbunden ist, **dadurch gekennzeichnet, dass** die Anzeigeeinheit (5) in einem oberen Bereich ein erstes Anzeigefenster (24A) zur Anzeige eines ersten Bildausschnittes aufweist, die Anzeigeeinheit (5) in einem unteren Bereich ein zweites Anzeigefenster (24B) zur Anzeige eines zweiten Bildausschnittes aufweist und die Anzeigeeinheit (5) zwischen dem ersten Anzeigefenster (24A) und dem zweiten Anzeigefenster (24B) ein drittes Anzeigefenster (24C) aufweist, wobei die Sende- und Empfangseinrichtung (2) in einer zum Senden und Empfangen von Kommunikationssignalen eingerichteten Ausrichtung zu dem Mauterfassungsgerät (20, 21) des Fahrzeugs (16, 17) angeordnet ist, wenn der erste Bildausschnitt in dem ersten Anzeigefenster (24A) das Mauterfassungsgerät (20, 21) aufweist, die Sende- und Empfangseinrichtung (2) innerhalb eines maximalen Leseabstands zu dem Mauterfassungsgerät (20) eines Fahrzeugs (16) eines ersten Typs, insbesondere eines Personenkraftfahrzeuges, angeordnet ist, wenn der erste Bildausschnitt in dem ersten Anzeigefenster (24A) das Mauterfassungsgerät (20) aufweist und der zweite Bildausschnitt in dem zweiten Anzeigefenster (24B) ein Nummernschild (18) des Fahrzeugs (16) des ersten Typs aufweist und wobei die Sende- und Empfangseinrichtung (2) innerhalb eines maximalen Leseabstands zu dem Mauterfassungsgerät (21) eines Fahrzeugs (17) eines zweiten Typs, insbesondere eines Lastkraftwagens, angeordnet ist, wenn der erste Bildausschnitt in dem ersten Anzeigefenster (24A) das Mauterfassungsgerät (21) aufweist und der zweite Bildausschnitt in dem dritten Anzeigefenster (24C) ein Nummernschild (19) des Fahrzeugs (17) des zweiten Typs aufweist.

2. Handgerät (1) nach Anspruch 1, **dadurch gekennzeichnet, dass** die Bilderfassungseinheit (6) zur Erfassung der Bilddaten im zweiten und/oder dritten Anzeigefenster (24B, 24C) und die Steuereinheit (3) zur Zuordnung dieser Bilddaten zu den empfangenen Kommunikationssignalen der Sende- und Empfangseinrichtung (2) ausgebildet ist.

3. Handgerät (1) nach Anspruch 1 oder 2, **dadurch gekennzeichnet, dass** die Eingabeeinheit (4) ein Auswahlmodul (15) zur Auswahl zwischen mehreren Anzeigemodi, mit Anzeige eines oder mehrerer Anzeigefenster (24A, 24B, 24C), der Anzeigeeinheit (5) aufweist.

4. Handgerät (1) nach einem der Ansprüche 1 bis 3, **dadurch gekennzeichnet, dass** die Anzeigeeinheit (5) zur kontinuierlichen Anzeige veränderlicher Bilddaten des Fahrzeugs (16, 17) beim Ausrichten der Sende- und Empfangseinrichtung (2) an dem Mauterfassungsgerät (20, 21) bzw. beim Einstellen des Leseabstands zwischen der Sende- und Empfangseinrichtung (2) und dem Mauterfassungsgerät (20, 21) eingerichtet ist.

5. Handgerät (1) nach einem der Ansprüche 1 bis 4, **dadurch gekennzeichnet, dass** die Steuereinheit (3) mit einem Speicher (7) zum Speichern der Bilddaten und/oder mit einem Sender (8) zum Übertragen der Bilddaten an einen Empfänger und/oder mit einem Schrifterkennungsmodul (9) zum Erkennen des Nummernschildes (18, 19) verbunden ist.

6. Handgerät (1) nach einem der Ansprüche 1 bis 5, **dadurch gekennzeichnet, dass** die Sende- und Empfangseinrichtung (2) einen Sender (11) und einen Empfänger (12) für Mikrowellensignale und/ oder einen Sender (13) und einen Empfänger (14) für Infrarotsignale aufweist, welche zumindest teilweise überlappende Sende- bzw. Empfangskeulen (22) aufweisen.

7. Handgerät (1) nach Anspruch 6, **dadurch gekennzeichnet, dass** die Steuereinheit (3) für einen gleichzeitigen Betrieb der Sender (11, 13) und Empfänger (12, 14) für Mikrowellensignale und Infrarotsignale und/oder für eine automatische Umschaltung zwischen dem Betrieb des Senders (11) und Empfängers (12) für Mikrowellensignale und dem Betrieb des Senders (13) und Empfängers (14) für Infrarotsignale ausgebildet ist.

8. Handgerät (1) nach Anspruch 6 oder 7, **dadurch gekennzeichnet, dass** die Steuereinheit (3) für einen mehrfach aufeinanderfolgenden Betrieb zumindest eines der Sender (11, 13) und des zugehörigen Empfängers (12, 14) ausgebildet ist.

9. Handgerät (1) nach einem der Ansprüche 1 bis 8 , **dadurch gekennzeichnet, dass** die Steuereinheit (3) mit einer Ausgabeeinheit (10) zum Signalisieren einer erfolgreichen oder fehlgeschlagenen Kommunikation zwischen der Sende- und Empfangseinrichtung (2) und dem Mauterfassungsgerät (20, 21) des Fahrzeugs (16, 17) verbunden ist.

10. Verfahren zur Kontrolle eines Mauterfassungsgeräts (20, 21) in einem Fahrzeug (16, 17) mit einem Handgerät (1), wobei mit einer Sende- und Empfangseinrichtung (2) des Handgeräts (1) Kommunikationssignale zwischen dem Handgerät (1) und dem Mauterfassungsgerät (20, 21) ausgetauscht werden, um in dem Mauterfassungsgerät (20, 21) vorgehaltene Mautdaten auszulesen, wobei Bilddaten des Fahrzeugs (16, 17) laufend mit einer Bilderfassungseinheit (6) des Handgeräts (1) erfasst und mit einer Anzeigeeinheit (5) des Handgeräts (1) angezeigt werden, **dadurch gekennzeichnet, dass** die Winkellage des Handgeräts (1) so lange verändert wird, bis ein das Mauterfassungsgerät (20, 21) enthaltender Bildausschnitt in einem ersten Anzeigefenster (24A) in einem oberen Bereich der Anzeigeeinheit (5) angezeigt wird, um das Handgerät (1) in einer zum Senden und Empfangen von Kommunikationssignalen eingerichteten Ausrichtung zu dem Mauterfassungsgerät (20, 21) des Fahrzeugs (16, 17) zu positionieren Z , und dass der Abstand zwischen dem Handgerät (1) und dem Fahrzeug (16, 17) so lange verändert wird, bis der das Mauterfassungsgerät (20, 21) enthaltende Bildausschnitt im ersten Anzeigefenster (24A) der Anzeigeeinheit (5) angezeigt wird und entweder ein Nummernschild (18) des Fahrzeugs (16) eines ersten Typs, insbesondere eines Personenkraftfahrzeuges, in einem zweiten Anzeigefenster (24B) in einem unteren Bereich der Anzeigeeinheit (5) angezeigt wird, um das Handgerät (1) innerhalb eines maximalen Leseabstands zu dem Mauterfassungsgerät (20) des Fahrzeugs (16) des ersten Typs zu positionieren oder ein Nummernschild (19) des Fahrzeugs (17) eines zweiten Typs, insbesondere eines Lastkraftwagens, in einem zwischen dem ersten Anzeigefenster (24A) und dem zweiten Anzeigefenster (24B) angeordneten dritten Anzeigefenster (24C) der Anzeigeeinheit (5) angezeigt wird, um das Handgerät (1) innerhalb eines maximalen Leseabstands zu dem Mauterfassungsgerät (21) des Fahrzeugs (17) des zweiten Typs zu positionieren.

11. Verfahren nach Anspruch 10, **dadurch gekennzeichnet, dass** die Bilddaten im zweiten Anzeigefenster (24B) oder im dritten Anzeigefenster (24C) erfasst, insbesondere mit einem Schrifterkennungsmodul (9) erkannt werden, und den Kommunikationssignalen zugeordnet werden.

12. Verfahren nach Anspruch 10 oder 11, **dadurch gekennzeichnet, dass** ein Fehlschlagen der Kommunikation zwischen dem Handgerät (1) und dem Mauterfassungsgerät (20, 21) des Fahrzeugs (16, 17) mittels einer Ausgabeeinheit (10) des Handgeräts (1) und/oder mittels der Anzeigeeinheit (5) signalisiert wird, um das Handgerät (1) für einen nächsten Kommunikationsversuch zu dem Mauterfassungsgerät (20, 21) neu, insbesondere näher, zu positionieren.

13. Verfahren nach Anspruch 10 oder 11, **dadurch gekennzeichnet, dass** eine erfolgreiche Kommunikation zwischen dem Handgerät (1) und dem Mauterfassungsgerät (20, 21) des Fahrzeugs (16, 17) mittels einer Ausgabeeinheit (10) des Handgeräts (1) und/oder mittels der Anzeigeeinheit (5) signalisiert wird.

## Claims

1. Handheld device (1) for checking a toll collection device (20, 21) in a vehicle (16, 17), comprising a transceiver (2) for transmitting and receiving communication signals, a control unit (3) for the transceiver (2), an input unit (4) for inputting input data and a display unit (5) for displaying input and output data, an image capturing unit (6) for capturing image data of the vehicle (16, 17) being provided, and the image capturing unit (6) being connected to the display unit (5) so as to display the image data, **characterised in that** the display unit (5) has a first display window (24A) in an upper region for displaying a first image portion, the display unit (5) has a second display window (24B) in a lower region for displaying a second image portion and the display unit (5) has a third display window (24C) between the first display window (24A) and the second display window (24B), the transceiver (2) being arranged with respect to the toll collection device (20, 21) of the vehicle (16, 17) in an orientation designed for transmitting and receiving communication signals if the first image portion in the first display window (24A) comprises the toll collection device (20, 21), the transceiver (2) being arranged within a maximum reading distance from the toll collection device (20) of a vehicle (16) of a first type, in particular a passenger car, if the first image portion in the first display window (24A) comprises the toll collection device (20) and the second image portion in the second display window (24B) comprises a number plate (18) of the vehicle (16) of the first type, and the transceiver (2) being arranged within a maximum reading distance from the toll collection device (21) of a vehicle (17) of a second type, in particular a lorry, if the first image portion in the first display window (24A) comprises the toll collection device (21) and the second image portion in the third display window (24C) comprises a number plate (19) of the vehicle (17) of the second type.

2. Handheld device (1) according to claim 1, **characterised in that** the image capturing unit (6) is designed to capture the image data in the second and/or third display window (24B, 24C) and the control unit (3) is designed to assign these image data to the received communication signals from the transceiver (2).

3. Handheld device (1) according to either claim 1 or claim 2, **characterised in that** the input unit (4) has a selection module (15) for making a selection from a plurality of display modes of the display unit (5), involving one or more display windows (24A, 24B, 24C).

4. Handheld device (1) according to any of claims 1 to 3, **characterised in that** the display unit (5) is designed to continuously display variable image data of the vehicle (16, 17) when the transceiver (2) is being aligned with the toll collection device (20, 21) or when the reading distance between the transceiver (2) and the toll collection device (20, 21) is being set.

5. Handheld device (1) according to any of claims 1 to 4, **characterised in that** the control unit (3) is connected to a memory (7) for storing the image data and/or is connected to a transmitter (8) for transferring the image data to a receiver and/or is connected to a character recognition module (9) for recognising the number plate (18, 19).

6. Handheld device (1) according to any of claims 1 to 5, **characterised in that** the transceiver (2) has a transmitter (11) and a receiver (12) for microwave signals and/or a transmitter (13) and a receiver (14) for infrared signals, which transmitters and receivers have at least partially overlapping transmitting and receiving lobes (22).

7. Handheld device (1) according to claim 6, **characterised in that** the control unit (3) is designed to simultaneously operate the transmitter (11, 13) and receiver (12, 14) for microwave signals and for infrared signals and/or to automatically switch between operating the transmitter (11) and receiver (12) for microwave signals and operating the transmitter (13) and receiver (14) for infrared signals.

8. Handheld device (1) according to either claim 6 or claim 7, **characterised in that** the control unit (3) is designed to successively operate at least one of the transmitters (11, 13) and the associated receiver (12, 14) multiple times.

9. Handheld device (1) according to any of claims 1 to 8, **characterised in that** the control unit (3) is connected to an output unit (10) so as to signal successful or failed communication between the transceiver (2) and the toll collection device (20, 21) of the vehicle (16, 17).

10. Method for checking a toll collection device (20, 21) in a vehicle (16, 17) using a handheld device (1), communication signals being exchanged between the handheld device (1) and the toll collection device (20, 21) by means of a transceiver (2) of the handheld device (1) in order to read out toll data held in the toll collection device (20, 21), image data of the vehicle (16, 17) being continuously captured by means of an image capturing unit (6) of the handheld device (1) and displayed by means of a display unit (5) of the handheld device (1), **characterised in that** the angular position of the handheld device (1) is changed until an image portion containing the toll collection device (20, 21) is displayed in a first display window (24A) in an upper region of the display unit (5) in order to position the handheld device (1) with respect to the toll collection device (20, 21) of the vehicle (16, 17) in an orientation designed for transmitting and receiving communication signals, and **in that** the distance between the handheld device (1) and the vehicle (16, 17) is changed until the image portion containing the toll collection device (20, 21) is displayed in the first display window (24A) of the display unit (5) and either a number plate (18) of the vehicle (16) of a first type, in particular a passenger car, is displayed in a second display window (24B) in a lower region of the display unit (5) in order to position the handheld device (1) within a maximum reading distance from the toll collection device (20) of the vehicle (16) of the first type, or a number plate (19) of the vehicle (17) of a second type, in particular a lorry, is displayed in a third display window (24C) of the display unit (5) arranged between the first display window (24A) and the second display window (24B) in order to position the handheld device (1) within a maximum reading distance from the toll collection device (21) of the vehicle (17) of the second type.

11. Method according to claim 10, **characterised in that** the image data in the second display window (24B) or in the third display window (24C) are captured, in particular recognised by a character recognition module (9), and assigned to the communication signals.

12. Method according to either claim 10 or claim 11, **characterised in that** failure of the communication between the handheld device (1) and the toll collection device (20, 21) of the vehicle (16, 17) is signalled by means of an output unit (10) of the handheld device (1) and/or by means of the display unit (5) in order to reposition the handheld device (1) with respect to the toll collection device (20, 21), in particular in order to bring said handheld device closer to said toll collection device, for the next communication attempt.

13. Method according to either claim 10 or claim 11, **characterised in that** successful communication between the handheld device (1) and the toll collection device (20, 21) of the vehicle (16, 17) is signalled by means of an output unit (10) of the handheld device (1) and/or by means of the display unit (5).

## Revendications

1. Appareil portatif (1) destiné à piloter un appareil de télépéage (20, 21) dans un véhicule (16, 17), avec un dispositif d'émission et de réception (2) pour émettre et recevoir des signaux de communication, une unité de commande (3) pour le dispositif d'émission et de réception (2), une unité d'entrée (4) pour entrer des données d'entrée et une unité d'affichage (5) pour afficher des données d'entrée ou de sortie, dans lequel une unité de détection d'image (6) est prévue pour la détection des données d'image du véhicule (16, 17), et l'unité de détection d'image (6) est reliée à l'unité d'affichage (5) pour l'affichage des données d'image, **caractérisé en ce que** l'unité d'affichage (5) présente dans une zone supérieure une première fenêtre d'affichage (24A) pour l'affichage d'une première partie d'image, l'unité d'affichage (5) présente dans une zone inférieure une deuxième fenêtre d'affichage (24B) pour l'affichage d'une seconde partie d'image, et l'unité d'affichage (5) présente une troisième fenêtre d'affichage (24C) entre la première fenêtre d'affichage (24A) et la deuxième fenêtre d'affichage (24B), dans lequel le dispositif d'émission et de réception (2) est agencé par rapport à l'appareil de télépéage (20, 21) du véhicule (16, 17) dans une orientation arrangée pour émettre et recevoir des signaux de communication lorsque la première partie d'image présente l'appareil de télépéage (20, 21) dans la première fenêtre d'affichage (24A), le dispositif d'émission et de réception (2) est agencé par rapport à l'appareil de télépéage (20) d'un véhicule (16) d'un premier type, en particulier d'une voiture particulière, à l'intérieur d'une distance de lecture maximale lorsque la première partie d'image présente l'appareil de télépéage (20) dans la première fenêtre d'affichage (24A), et la seconde partie d'image présente dans la deuxième fenêtre d'affichage (24B) présente une plaque d'immatriculation (18) du véhicule (16) du premier type, et dans lequel le dispositif d'émission et de réception (2) est agencé par rapport à l'appareil de télépéage (21) d'un véhicule (17) d'un second type, en particulier d'un poids lourd, à l'intérieur d'une distance de lecture maximale lorsque la première partie d'image présente l'appareil de télépéage (21) dans la première fenêtre d'affichage (24A) et la seconde partie d'image présente une plaque d'immatriculation (19) du véhicule (17) du second type dans la troisième fenêtre d'affichage (24C).

2. Appareil portatif (1) selon la revendication 1, **caractérisé en ce que** l'unité de détection d'image (6) est conçue pour détecter les données d'image dans la deuxième et/ou troisième fenêtre d'affichage (24B, 24C) et l'unité de commande (3) est conçue pour attribuer ces données d'image aux signaux de communication du dispositif d'émission et de réception (2) reçus.

3. Appareil portatif (1) selon la revendication 1 ou 2, **caractérisé en ce que** l'unité d'entrée (4) présente un module de sélection (15) pour sélectionner entre plusieurs modes d'affichage, avec affichage d'une ou plusieurs fenêtres d'affichage (24A, 24B, 24C), de l'unité d'affichage (5).

4. Appareil portatif (1) selon l'une des revendications 1 à 3, **caractérisé en ce que** l'unité d'affichage (5) est arrangée pour un affichage en continu de données d'image modifiables du véhicule (16, 17) lors de l'orientation du dispositif d'émission et de réception (2) au niveau de l'appareil de télépéage (20, 21) ou lors du réglage de la distance de lecture entre le dispositif d'émission et de réception (2) et l'appareil de télépéage (20, 21).

5. Appareil portatif (1) selon l'une des revendications 1 à 4, **caractérisé en ce que** l'unité de commande (3) est reliée à une mémoire (7) pour mémoriser les données d'image et/ou à un émetteur (8) pour transmettre les données d'image vers un récepteur et/ou à un module de reconnaissance d'écriture (9) pour reconnaître la plaque d'immatriculation (18, 19).

6. Appareil portatif (1) selon l'une des revendications 1 à 5, **caractérisé en ce que** le dispositif d'émission et de réception (2) présente un émetteur (11) et un récepteur (12) pour des signaux micro-ondes et/ou un émetteur (13) et un récepteur (14) pour des signaux infrarouges, lesquels présentent au moins partiellement des lobes d'émission ou de réception (22) se chevauchant.

7. Appareil portatif (1) selon la revendication 6, **caractérisé en ce que** l'unité de commande (3) est conçue pour un fonctionnement simultané des émetteurs (11, 13) et des récepteurs (12, 14) pour des signaux micro-ondes et des signaux infrarouges et/ou pour une commutation automatique entre le fonctionnement de l'émetteur (11) et du récepteur (12) pour des signaux micro-ondes et le fonctionnement de l'émetteur (13) et du récepteur (14) pour des signaux infrarouges.

8. Appareil portatif (1) selon la revendication 6 ou 7, **caractérisé en ce que** l'unité de commande (3) est conçue pour un fonctionnement se succédant à plusieurs reprises d'au moins un des émetteurs (11, 13) et du récepteur (12, 14) associé.

9. Appareil portatif (1) selon l'une des revendications 1 à 8, **caractérisé en ce que** l'unité de commande (3) est reliée à une unité de sortie (10) pour signaler une communication réussie ou ratée entre le dispositif d'émission et de réception (2) et l'appareil de télépéage (20, 21) du véhicule (16, 17).

10. Procédé destiné à piloter un appareil de télépéage (20, 21) dans un véhicule (16, 17) avec un appareil portatif (1), dans lequel des signaux de communication sont échangés entre l'appareil portatif (1) et l'appareil de télépéage (20, 21) à l'aide d'un dispositif d'émission et de réception (2) de l'appareil portatif (1), pour lire des données tenues à disposition dans l'appareil de télépéage (20, 21), dans lequel des données d'image du véhicule (16, 17) sont détectées en permanence avec une unité de détection d'image (6) de l'appareil portatif (1) et affichées avec une unité d'affichage (5) de l'appareil portatif (1), **caractérisé en ce que** la position angulaire de l'appareil portatif (1) est modifiée jusqu'à ce qu'une partie d'image contenant l'appareil de télépéage (20, 21) soit affichée dans une première fenêtre d'affichage (24A) dans une zone supérieure de l'unité d'affichage (5), afin de positionner l'appareil portatif (1) par rapport à l'appareil de télépéage (20, 21) du véhicule (16, 17) dans une orientation arrangée pour émettre et recevoir des signaux de communication, et **en ce que** la distance entre l'appareil portatif (1) et le véhicule (16, 17) est modifiée jusqu'à ce que la partie d'image contenant l'appareil de télépéage (20, 21) soit affichée dans la première fenêtre d'affichage (24A) de l'unité d'affichage (5), et soit une plaque d'immatriculation (18) du véhicule (16) d'un premier type, en particulier d'une voiture particulière, soit affichée dans une deuxième fenêtre d'affichage (24B) dans une zone inférieure de l'unité d'affichage (5) pour positionner l'appareil portatif (1) à l'intérieur d'une distance de lecture maximale par rapport à l'appareil de télépéage (20) du véhicule (16) du premier type, soit une plaque d'immatriculation (19) du véhicule (17) d'un second type, en particulier d'un poids lourd, soit affichée dans une troisième fenêtre d'affichage (24C) agencée entre la première fenêtre d'affichage (24A) et la deuxième fenêtre d'affichage (24B) pour positionner l'appareil portatif (1) à l'intérieur d'une distance de lecture maximale par rapport à l'appareil de télépéage (21) du véhicule (17) du second type.

11. Procédé selon la revendication 10, **caractérisé en ce que** les données d'image sont détectées, en particulier reconnues avec un module de reconnaissance d'écriture (9), dans la deuxième fenêtre d'affichage (24B) ou dans la troisième fenêtre d'affichage (24C), et attribuées aux signaux de communication.

12. Procédé selon la revendication 10 ou 11, **caractérisé en ce qu'**un échec de la communication entre l'appareil portatif (1) et l'appareil de télépéage (20, 21) du véhicule (16, 17) est signalé au moyen d'une unité de sortie (10) de l'appareil portatif (1) et/ou au moyen de l'unité d'affichage (5) afin de positionner l'appareil portatif (1) de nouveau, en particulier plus près, par rapport à l'appareil de télépéage (20, 21) pour une tentative de communication suivante.

13. Procédé selon la revendication 10 ou 11, **caractérisé en ce qu'**une communication réussie entre l'appareil portatif (1) et l'appareil de télépéage (20, 21) du véhicule (16, 17) est signalée au moyen d'une unité de sortie (10) de l'appareil portatif (1) et/ou au moyen de l'unité d'affichage (5).
